# EUROPÄISCHE PATENTSCHRIFT

(11) **EP 0 853 719 B1**
(45) Veröffentlichungstag und Bekanntmachung des Hinweises auf die Patenterteilung: **03.03.1999**
(21) Anmeldenummer: 96934500.8
(22) Anmeldetag: 30.09.1996
(51) Int. Cl.: F01N 3/20, F01N 3/28, B01J 35/04, B01J 35/00

(54) **ELEKTRISCH BEHEIZBARER, IN TEILBEREICHE UNTERTEILTER WABENKÖRPER MIT VERBINDUNGSSTEGEN**
ELECTRICALLY HEATABLE HONEYCOMBED BODY SUBDIVIDED INTO PARTIAL AREAS WITH INTERCONNECTING WEBS
CORPS A NIDS D'ABEILLES POUVANT ETRE CHAUFFE ELECTRIQUEMENT, SUBDIVISE EN ZONES PARTIELLES ET POURVU D'ELEMENTS JOINTIFS

(30) Priorität: 02.10.1995 DE 19536853
(43) Veröffentlichungstag der Anmeldung: 22.07.1998
(73) Patentinhaber: Emitec Gesellschaft für Emissionstechnologie mbH, 53797 Lohmar (DE)
(72) Erfinder: Maus, Wolfgang, D-51429 Bergisch Gladbach (DE)
(74) Vertreter: Kahlhöfer, Hermann, Dipl.-Phys.
(86) Internationale Anmeldenummer: EP9604273
(87) Internationale Veröffentlichungsnummer: WO9713057

(56) Entgegenhaltungen:
- EP-A- 0 502 727
- WO-A-92/02714
- WO-A-94/17292
- DE-U- 9 211 810
- US-A- 5 308 591

## Beschreibung

Die Erfindung betrifft einen Wabenkörper, der aus mehreren voneinander elektrisch getrennten Teilbereichen besteht, insbesondere zur Verwendung als Trägerkörper für beheizbare katalytische Konverter von Kraftfahrzeugen.

Elektrisch beheizbare Wabenkörper werden verwendet als Trägerkörper für katalytische Konverter zur Umsetzung von Schadstoffen in den Verbrennungsabgasen von Verbrennungskraftmaschinen. Angesichts der weltweit starken Bemühungen zur Reduzierung von Schadstoffemissionen und der deshalb immer strenger werdenden Abgasvorschriften für Verbrennungskraftmaschinen ist es wichtig, daß eine möglichst vollständige Umsetzung der Verbrennungsabgase auch schon während der Kaltstartphase stattfindet. Hierfür werden elektrisch beheizbare Katalysatoren eingesetzt, die kurz vor und/oder nach dem Start der Verbrennungskraftmaschine beheizt werden. Dadurch wird sichergestellt, daß die anfänglich noch verhältnismäßig kalten Verbrennungsabgase schnell katalytisch umgesetzt werden. Weiterhin finden elektrisch beheizbare Wabenkörper Anwendung in anderen Abgassystemen, Lufterhitzern und dergleichen.

Derartige elektrisch beheizbare Wabenkörper sind z.B. offenbart in der WO 89/10471 und der WO 92/02714. Um hier einen geeigneten elektrischen Widerstand zu erreichen, wird der Wabenkörper durch Spalte oder elektrisch isolierende Zwischenschichten elektrisch so unterteilt, daß sich mindestens ein elektrischer Strompfad mit dem gewünschten Widerstand ergibt.

In der DE 43 07 431 A1 werden Wabenkörperformen vorgestellt, die unter anderem durch Extrusion gefertigt werden können. Bei aus einzelnen Teilen oder Teilbereichen bestehenden Wabenkörpern mit Spalten besteht die Gefahr der Materialermüdung bedingt durch im Betrieb auftretende Schwingungen, Erschütterungen und Stöße. Weiterhin muß verhindert werden, daß es zu einem Kontakt der sich gegenüberliegenden Seiten eines Spaltes, z.B. aufgrund von Erwärmung, kommt. In der WO 92/02714 werden daher verschiedene Möglichkeiten zur Stabilisierung der dortigen Wabenstruktur beschrieben. Bei diesen Ausführungen sind Tragstrukturen im Wabenkörper untereinander und/oder mit dem Mantelrohr durch elektrisch isolierende Stützen verbunden. Bei Wabenkörperformen, wie zum Beispiel in der DE 43 07 431 A1 beschrieben, existieren jedoch keine Tragstrukturen, die als Verbindungspunkte dienen können.

Es ist somit Aufgabe der vorliegenden Erfindung, eine so große Stabilisierung der elektrisch isolierenden Spalten zwischen den Teilbereichen eines elektrisch beheizbaren Wabenkörpers zu erreichen, daß für diesen auch ein Betrieb unter ungünstigsten mechanischen und thermischen Wechselbelastungen möglich ist, insbesondere ohne daß sich die gegenüberliegenden Seiten eines Spalts berühren oder Ermüdungsbrüche an Verbindungsstellen zwischen Teilbereichen auftreten.

Diese Aufgabe wird erfindungsgemäß durch einen Wabenkörper nach Anspruch 1 gelöst.

Die erfindungsgemäße Verbindung durch Verbindungsstege zwischen Wabenkörperteilbereichen gewährleistet die Aufnahme von Kräften und Momenten, die auf die Wabenkörperteilbereiche wirken. Die Verbindungsstege führen zu einer Versteifung der aus einzelnen Teilbereichen gebildeten Gesamtstruktur des Wabenkörpers, die ihr die Aufnahme von Stößen, Schwingungen und Erschütterungen aber auch von zum Beispiel durch Erwärmung auftretenden Kräften erlauben und die diese gegebenenfalls auch an das Mantelrohr weiterleiten können. Dazu ist es günstig, zwischen den einzelnen Teilbereichen des Wabenkörpers Verbindungsstege an den Stirnseiten anzubringen, die die Teilbereiche untereinander verbinden. Die Verbindungsstege besitzen dazu bevorzugt eine Brückenform. Dieses ist besonders dann vorteilhaft, wenn nur wenige Teilbereiche des Wabenkörpers miteinander verbunden werden müssen. Wichtig ist, daß ein solcher Verbindungssteg einfach einen Befestigungspunkt innerhalb eines Teilbereiches aufweist, so daß keine zusätzlichen Tragstrukturen vorhanden sein müssen.

Eine günstige Weiterbildung der Erfindung entsteht durch eine Zusammenfassung der einzelnen Stegverbindungen, zum Beispiel zu einer formschlüssigen Verbindung, in einer Kammform, die aufgesteckt wird. Dieses ergibt einen einfachen Zusammenschluß von vielen einzelnen Teilbereichen. Die elektrische Isolation zwischen den einzelnen Teilbereichen erfolgt durch geeignete Materialwahl, Beschichtung und/oder Konstruktion des Verbindungssteges.

Eine Verbindung zwischen Wabenkörper und Mantelrohr wird weiterhin durch das Anbringen von Verbindungsstegen hergestellt, die vor und/oder hinter den Stirnseiten der Wabenkörper und/oder im Wabenkörper verlaufen.

Eine andere vorteilhafte Ausbildungsform einer formschlüssigen Verbindung ist die Integration der Verbindungsstege in einen Kragen an der Stirnseite des Mantelkörpers. So erhält man eine Verbindung zwischen Mantelrohr und Wabenkörper bei sehr geringem Einbauaufwand. Bestehen Probleme bei der Installation eines Kragens, so besteht die Möglichkeit, eine Halterungsstruktur für die Verbindungsstege als Rahmen einzusetzen. Einbauprobleme beim Anschluß der Wabenkörper an das nächste Bauteil können damit vermieden werden.

Eine besondere Ausführung des Verbindungssteges wird durch eine Stiftform des Verbindungssteges erreicht, wobei die elektrische Isolation der einzelnen Teilbereiche durch die Konstruktion der Stiftverbindung erfolgt. Bekannt ist eine dafür geeignete Konstruktion, durch die in der WO 94/17292 beschriebene Stützstruktur zur metallischen Verbindung von voneinander elektrisch getrennten leitfähigen Bauteilen. Einen schichtartigen, ummantelten Aufbau von Stützelementen findet man ebenfalls in DE-GM 93 17 050.5 offenbart.

Weitere Vorteile, Merkmale und Anwendungsmöglichkeiten der vorliegenden Erfindung ergeben sich aus der Zeichnung mit Beschreibung ausgewählter Ausführungsbeispiele, auf die die Erfindung jedoch nicht beschränkt ist.
- Fig. 1: zeigt eine längsgeschnittene schematische Darstellung einer Anordnung mit einem Hauptkatalysator und davor angeordnetem Heizkatalysator.
- Fig. 2: verdeutlicht einen Querschnitt senkrecht zur Hauptströmungsrichtung eines Wabenkörpers entlang der Linie II-II in Fig. 1, wobei verschiedene Arten von Wabenstrukturen beispielhaft in Teilbereichen dargestellt sind.
- Fig. 3: veranschaulicht die Verbindung dreier Teilbereiche eines Wabenkörpers untereinander und mit dem Mantelrohr durch Stegverbindungen.
- Fig. 4: zeigt schematisch einen Verbindungssteg zwischen zwei Teilbereichen des Wabenkörpers, der in einer Ansicht schräg von vorn dargestellt ist.
- Fig. 5: läßt den inneren Aufbau einer Stegverbindung in Brückenform erkennen.
- Fig. 6: verdeutlicht eine kammartige Stegverbindung der einzelnen Teilbereiche des Wabenkörpers.
- Fig. 7: gibt die kammförmige Stegverbindung aus näherer Perspektive wieder.
- Fig. 8: veranschaulicht einen Kragen mit eingearbeiteten Stegverbindungen.
- Fig. 9: zeigt die Verbindung von Mantelrohr und Wabenkörper mittels einer stiftförmigen Stegverbindung.
- Fig. 10: zeigt einen Auschnitt einer eingebauten stiftförmigen Stegverbindung.

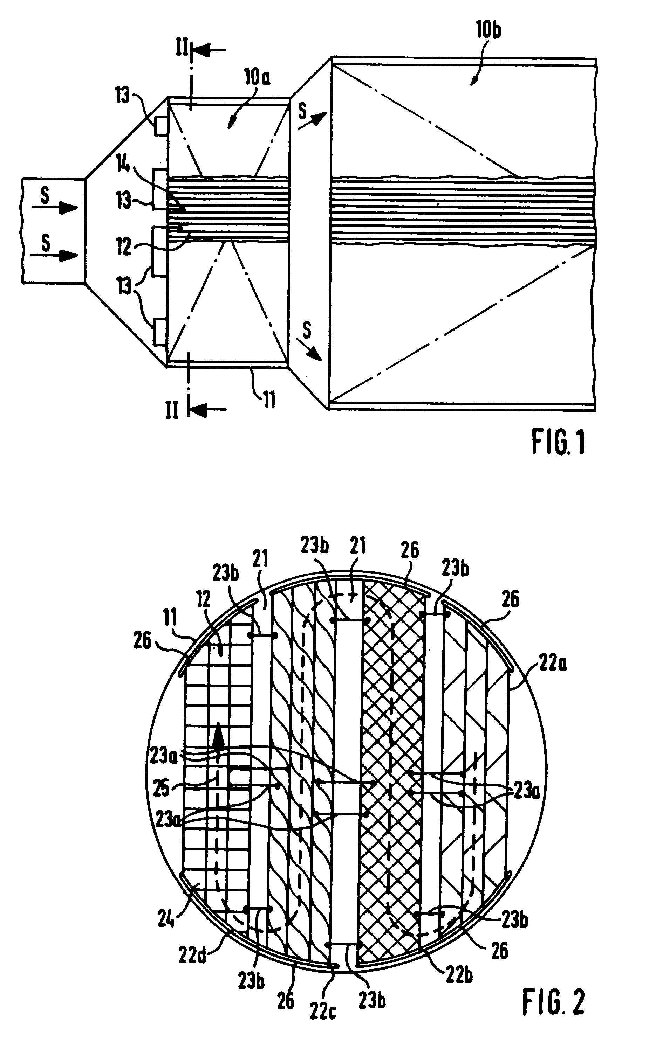

Fig. 1 verdeutlicht den Aufbau einer Abgasreinigungsvorrichtung bestehend aus Heiz- 10a und Hauptkatalysator 10b und sie umgebendem Mantelrohr 11. Ein Wabenkörper 12, zu erkennen im aufgeschnittenen Bereich in Hauptströmungsrichtung S, angedeutet durch Pfeile, im Heizkatalysator 10a liegend, wird durch erfindungsgemäße Verbindungsstege 13 stabilisiert. Dazu können Verbindungsstege 13 aus der Stirnseite des Wabenkörpers 12 herausragen. Dieses ist zum Beispiel bei auf den Wabenkörper 12 wirkende Biegemomente zur besseren Versteifung desselben günstig, da so günstige Hebellängen der Verbindungsstege 13 erreicht werden. Die Verbindungsstelle 14 zwischen Verbindungssteg 13 und Wabenkörper 12 liegt mindestens einmal je Verbindung innerhalb des Wabenkörpers 12. Darauf wird aber im späteren noch eingegangen.

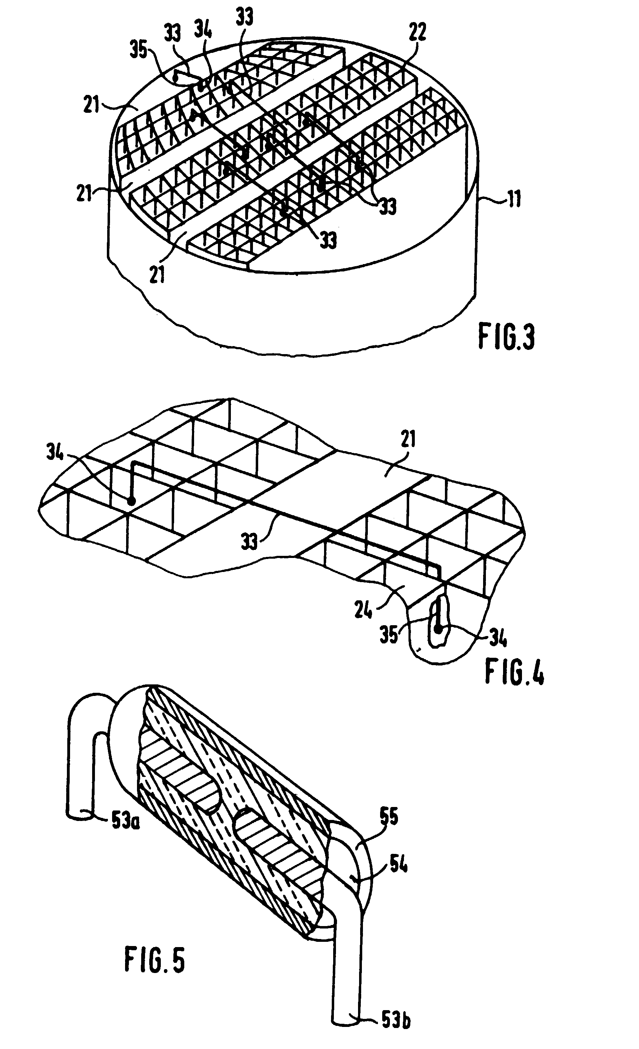

Fig. 2 zeigt einen beispielhaften Aufbau eines Wabenkörpers 12. Dieser besteht aus verschiedenen Wabenkörperteilbereichen 22 a-d. Die Verschiedenartigkeit der möglichen Wabenstrukturen ist in den einzelnen Wabenkörperteilbereichen 22 a-d veranschaulicht. Natürlich kommt im allgemeinen in einem Wabenkörper nur eine der möglichen Strukturen vor, so daß alle Teilbereiche gleich aufgebaut sind. Ein Vorteil der Erfindung liegt nun darin, daß sie für praktisch alle Strukturarten geeignet einsetzbar ist. Die Teilbereiche 22 a-d werden durch elektrisch isolierende Spalte 21 getrennt. Diese können mit Luft oder einem isolierenden Material gefüllt sein. Das Fluid strömt dann durch die einzelnen Kanäle 24. Durch elektrisch leitenden Aufnahmeverbindungen 26 der einzelnen Teilbereiche 22 a-d des Wabenkörpers 12, deren Ausgestaltung zum Beispiel der DE 43 07 431 A1 entnommen werden kann, ergibt sich ein mäanderförmiger Strompfad 25. Er ist durch eine gestrichelte Pfeillinie angedeutet. Für einen derartigen Wabenkörper 12 ergibt sich ein weiterer Vorteil der Erfindung aus der Flexibilität, die Verbindungsstege 23 an beliebigen Stellen einsetzen zu können. Treten zum Beispiel große Zugkräfte und Drehmomente am Rande der Wabenteilbereiche 22 a-d auf, sind Verbindungsstege 23a dort an den entsprechenden Wänden so angebracht, daß diese derartige Belastungen günstig aufnehmen können. Bei zum Beispiel eher in der Mitte der Teilbereiche 22 a-d auftretenden Druckkräfte werden die Verbindungsstege 23b dann wiederum anders ausgelegt. Dieses ist zum Beispiel in Fig. 4 übersichtlich dargestellt. Die beiden Beispiele verdeutlichen, wie für verschiedene Lastüberlegungen Verbindungsstege unterschiedlich einsetzbar sind.

Fig. 3 veranschaulicht die Stabilisierung der Spalte 21 zwischen verschiedenen Teilbereichen der hier gewählten Wabenform durch Verbindungsstege 33. Der Verbindungssteg 33 ist zumindest nicht durchgehend elektrisch leitend, um die verschiedenen Spannungspotentiale der einzelnen Teilbereiche 22 a-d des Wabenkörpers 12 zu wahren. Eine derartige Verbindung 33 stabilisiert die Spalte 21 zwischen einzelnen Wabenteilbereichen 22 a-d und vergrößert deren Formsteifigkeit. Sinnvoll ist es, daß ein Verbindungssteg 33 mindestens einen Befestigungspunkt 34 im Wabenkörper 12 selbst hat. Die Aufnahme von zum Beispiel Druckkräften nicht nur durch die Verbindung 34 des Verbindungsstegs 33 sondern auch durch die Berührungsfläche 35, die durch den auf dem Wabenteilbereich 22 aufliegenden Teil des Verbindungssteg 33 entsteht, wird dadurch erreicht. Einander gegenüberliegende Seiten der Wabenteilbereiche 22 a-d können sich dadurch nicht berühren. Um auf den Wabenkörper einwirkende Kräfte und Momente weiterleiten zu können, wird erfindungsgemäß mit einem Verbindungssteg 33 außerdem der Kontakt zwischen dem Mantelrohr 11 und den Teilbereichen 22 a-d des Wabenkörpers 12 hergestellt. Die Kraftaufnahme durch das Mantelrohr 11 führt dann zu einer weiteren Stabilisierung der Wabenteilbereiche 22 a-d und damit der Spalte 21.

Die Verbindung 34 zwischen Verbindungssteg 33 und Wabenkörper 12, in Fig. 4 dargestellt, kann je nach Materialwahl des Verbindungsstegs 33 in gelöteter, geschweißter, aufgesinterter oder anderer Art und Weise erfolgen. In Fig. 4 ist weiterhin die Berührungsfläche 35 auch genauer dargestellt, die bei auftretenden Druckkräften zu einer besseren Kraftübertragung zwischen Verbindungssteg 33 und Wabenkörper 12 führt. Durch eine Berührungsfläche 35, dadurch geschaffen, daß Teile des Verbindungsstegs 33 in einen Kanal 24 heineinragen, werden Biegemomente auf die Traverse des Verbindungssteges 33 vermindert.

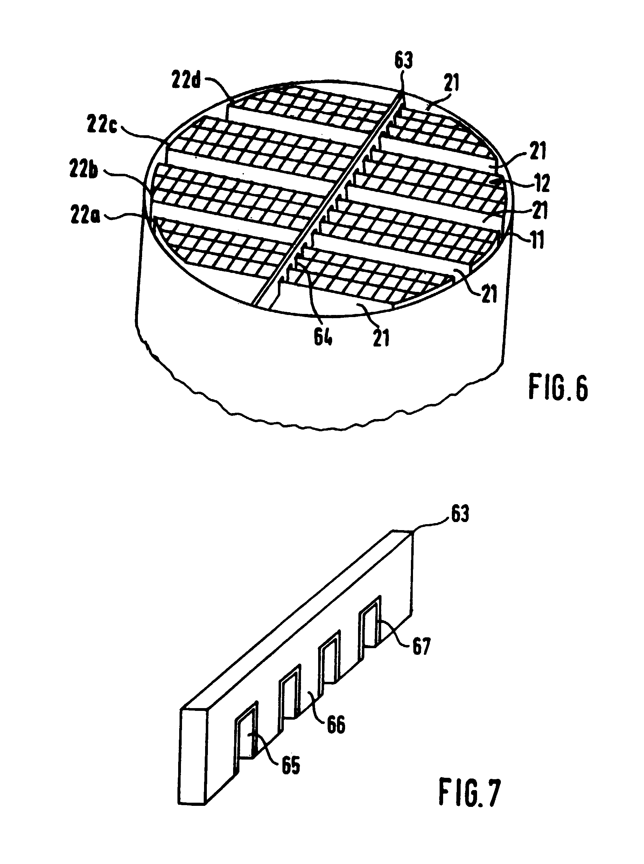

Fig. 5 stellt eine mögliche Bauform des Verbindungsstegs 33 in Brückenform vor. Sie besteht aus einem linken, 53a, und einem rechten Verbindungsstegteil 53b, miteinander verbunden durch ein sie in der Mitte umgebenden, elektrisch isolierenden Nichtleiter 54, zum Beispiel bestehend aus keramischem Material. Dieser wiederum ist von einer metallischen Umhüllung 55 umgeben. Bei Befestigung 34 des Verbindungsstegs 33 an zwei jeweils verschiedenen Teilbereichen 22 a-d des Wabenkörpers 12 ist so zum einen dafür gesorgt, daß der zwischen diesen herrschende Potentialunterschied bestehen bleibt. Zum anderen kann diese Brückenverbindung Zug-, Druckräfte und -momente gleicherweise gut aufnehmen und übertragen. Eine Herstellungsweise dieser Verbindung von metallischer Umhüllung 55, elektrisch isolierendem Nichtleiter 54 und dem Verbindungsstegteil 53a bzw. 53b wird in der WO 94/17292 offenbart.

Fig. 6 zeigt einen Verbindungssteg 63, der nicht nur vorteilhafterweise verschiedene Teilbereiche des Wabenkörpers 12 zusammenhält und stabilisiert, sondern gleichzeitig auch eine Stützfunktion am Mantelrohr 11 ausübt. Eine derartige Verbindung 64 kann damit, ohne nun weitere Verbindungstechniken auszuschließen, form- und/oder kraftschlüssig ausgeführt sein. Der Vorteil der Kammform 63 besteht in der Übertragung von auf den Wabenkörper 12 wirkende Kräfte auf das Mantelrohr 11 bei gleichzeitiger Stabilisierung der Spalte 21 zwischen den Wabenteilbereichen 22 a-d. Andererseits kann sogar ein von außen auf das Mantelrohr 11 ausgeübter Druck, zum Beispiel durch Stöße verursacht, aufgefangen werden, ohne daß ein Schaden an diesem oder am Wabenkörper 12 auftritt. Der Verbindungssteg in Kammform 63, näher dargestellt in Fig. 7, besitzt daher sich abwechselnde Aussparungen 65 und Stege 66, die in die Wabenform 12 hineinpassen und so ein Aufeinanderstoßen von gegenüberliegenden Seiten von Kanälen 24 oder Spalten 21 verhindert. Die Länge der Aussparungen 65 und der Stege 66 kann, zum Beispiel je nach Stabilitätsberechnung, variabel sein. Damit ein elektrischer Kurzschluß zwischen den einzelnen Teilbereichen 22 a-d der Wabenform 12 vermieden wird, besteht in der hier vorgestellten Ausführungsform die Oberfläche in den Aussparungen 67 aus einem elektrisch isolierenden Material, zum Beispiel Keramik. Dadurch wird die Möglichkeit erreicht, die Materialwahl für die Stegverbindung 63 nach Festigkeitsgesichtspunkten zu treffen.

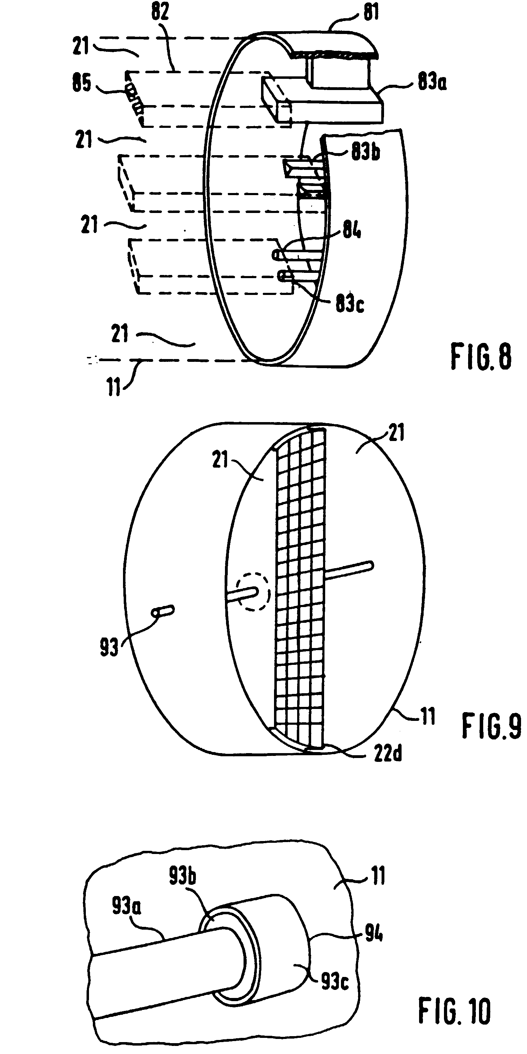

Fig. 8 stellt eine erfindungsgemäße Lösung dar, bei der höchstmögliche Stabilität der Spalten 21 bei geringem Einbauaufwand der Verbindungsstege 83 a-c erreicht wird. Ein Kragen 81, in den verschiedene Ausführungen von Verbindungsstege 83 a-c integriert sind, können einfach beim Aufsetzen des Kragens 81 auf den Mantelkörper 11 in die Teilbereiche des Wabenkörpers 82 hineingreifen und so eine nachträglich auch wieder lösbare Verbindung 84 zwischen Mantelrohr 11 und Wabenkörperteilbereich 82 herstellen. Eine mögliche Verbindung von Verbindungssteg 83 und Kragen 81 ist aus dem Ausbruch ersichtlich. Für eine hohe Berührungsfläche und damit gute Kraftübertragung zwischen Wabenkörperteilbereich 82 und Verbindungssteg 83 ist es ebenfalls günstig, daß dieser, wie zum Beispiel der Verbindungsteg 83a zeigt, sich den Abmaßen des Kanalquerschnitts 85 anpaßt. Anstatt eines Kragens kann eine funktionelle Entsprechung - Träger der Verbindungsstege 83 a-c - in Form eines Rahmens, der in das Mantelrohr 11 hineingeschoben wird, ebenfalls angewendet werden.

Fig. 9 verdeutlicht einen ebenfalls sehr vorteilhaften, erfindungsgemäßen Verbindungssteg 93 der Wabenkörperteilbereiche, hier durch einen der Form 22d charakterisiert, mit dem Mantelrohr 11. Dieser Verbindungssteg 93 besitzt eine Stiftform, die zwischen den beiden Stirnflächen des Wabenkörpers 12 verläuft, so daß die miteinander zu verbindenden Wabenkörperteilbereiche 22 a-d nur noch entsprechend zu bohren sind. Aus Fig. 10 wird der Aufbau des Verbindungsstegs 93 ersichtlich. Dieser Verbindungssteg 93 besteht, in Anlehnung an den Verbindungssteg 33, beschrieben in Fig.5, aus einem metallischen Stützstift 93a mit einer elektrisch isolierenden Umhüllung 93b sowie einer weiteren metallischen Umhüllung 93c, die die Berührungsfläche 94 zwischen dem Mantelrohr 11 und dem Verbindungsteg 93 herstellt. Kräfte, die senkrecht zum Verbindungssteg 93 auf den Wabenkörper wirken, und Momente können daher durch den Verbindungssteg 93 aufgenommen und an das Mantelrohr 11 weitergeleitet werden. Dazu werden die beiden Enden des Verbindungsstegs 93 mit dem Mantelrohr 11 verschweißt oder verlötet, ohne dadurch nun andere Verbindungstechniken auszuschließen. Durch mehrere, bei unterschiedlichen Umfangswinkeln und/oder axialen Langen des Mantelrohrs 11 angebrachte Verbindungsstege 93 kann dann eine äußerst hohe Stabilisierung der Spalten 21 erreicht werden.

Die vorliegende Erfindung ist besonders dazu geeignet ist, die Festigkeit des aus Teilbereichen bestehenden Wabenkörpers durch geeignete Verbindungen zu erhöhen und die zwischen ihnen liegenden Spalten zu stabilisieren.

### Bezugszeichenliste

- S: Hauptströmrichtung

- 10a: Heizkatalysator
- 10b: Hauptkatalysator
- 11: Mantelkörper
- 12: Wabenkörper
- 13: Verbindungssteg
- 14: Verbindungsstelle zw. Verbindungssteg und Wabenkörper

- 21: elektrisch isolierender Spalt
- 22 a-d: Wabenkörperteilbereiche
- 23a: Verbindungssteg mittig angeordnet
- 23b: Verbindungssteg im Randbereich angeordnet
- 24: Kanal, vom Fluid durchströmt
- 25: mäanderförmiger Strompfad
- 26: Aufnahmeverbindung der Wabenkörperteilbereiche

- 33: Verbindungssteg
- 34: Verbindungsstelle zwischen Verbindungssteg und Wabenkörper
- 35: Berührungsfläche

- 53a: linker Verbindungsstegteil
- 53b: rechter Verbindungsstegteil
- 54: Nichtleiter aus Füllmaterial, z.B. Keramik
- 55: metallische Umhüllung
- 63: Verbindungssteg in Kamm form
- 64: Befestigungspunkt
- 65: Aussparung
- 66: Steg
- 67: elektrisch isolierendes Mittel

- 81: Kragen
- 82: Teilbereich des Wabenkörpers
- 83 a,b,c: im Deckel eingearbeitete Verbindungsstege
- 84: Befestigungspunkt
- 85: Kanalquerschnitt

- 93: Stift
- 93a: metallischer Stützstift
- 93b: elektrisch isolierende Umhüllung
- 93c: metallische Umhüllung
- 94: Verbindung zwischen Verbindungssteg 93 und Mantelrohr 11

## Patentansprüche

1. Wabenkörper (12) mit von Fluid durchströmbaren, etwa parallel verlaufenden Kanälen (24) und mit elektrisch beheizbaren Teilbereichen (22 a-d), die durch mindestens einen Spalt (23) teilweise voneinander elektrisch isoliert sind, so daß sich ein gewundener, vorzugsweise etwa mäanderförmiger, Strompfad (25) durch den Wabenkörper (12) ergibt, dadurch gekennzeichnet, daß der Spalt (23) zwischen den Teilbereichen (22 a-d) durch mindestens einen elektrisch isolierenden Verbindungssteg (13; 33; 63; 83 a-c; 93) stabilisiert ist, der zumindest einen Befestigungspunkt (14; 34; 64; 84; 94) innerhalb eines Teilbereichs (22 a-d; 52) aufweist, wobei mindestens ein Ende des Verbindungssteges (13 ; 33 ; 63 ; 83) in einen Kanal (24) hineinragt und dort befestigt ist.

2. Wabenkörper nach Anspruch 1, umhüllt von einem Mantelrohr (11), dadurch gekennzeichnet, daß der Verbindungssteg (13; 33; 83 a-c; 93) das Mantelrohr (11) mit mindestens einem Teilbereich (22 a-d; 82) des Wabenkörpers (12) verbindet.

3. Wabenkörper nach Anspruch 1 oder 2, dadurch gekennzeichnet, daß der Verbindungssteg (13; 33; 63; 83 a-c; 93) mindestens eine Verbindung (34; 64; 84; 94) zwischen verschiedenen Teilbereichen (22 a-d; 82) des Wabenkörpers (12) herstellt.

4. Wabenkörper nach Anspruch 1, 2 oder 3, umhüllt von einem Mantelrohr (11), dadurch gekennzeichnet, daß der Verbindungssteg (63; 93) eine Verbindung (64; 94) zwischen diametral gegenüberliegenden Abschnitten des Mantelrohrs (11) und mindestens einem Wabenkörperteilbereich (22 a-d) schafft.

5. Wabenkörper nach Anspruch 1, 2, 3 oder 4, dadurch gekennzeichnet, daß der Verbindungssteg (13; 33) ganz oder teilweise über mindestens eine Stirnseite des Wabenkörpers (12) herausragt.

6. Wabenkörper nach Anspruch 1, 2, 3 oder 4, dadurch gekennzeichnet, daß der Verbindungssteg (63; 93) in einer Ebene zu den Stirnseiten des Wabenkörpers (12) zwischen den Stirnseiten verläuft.

7. Wabenkörper nach einem der vorhergehenden Ansprüche, dadurch gekennzeichnet, daß der Verbindungssteg die Form eines mehrschichtigen, ummantelten Stifts (93) hat, dessen Innen- (93a) und Außenschicht (93c) jeweils aus einem metallischen Material bestehen, während die dazwischenliegende Schicht (93b) elektrisch isolierend ist.

8. Wabenkörper nach einem der vorhergehenden Ansprüche, dadurch gekennzeichnet, daß der Verbindungssteg (13; 33; 63) die Form einer Brücke mit mindestens zwei Stützpfeilern besitzt, die jeweils voneinander elektrisch isoliert sind.

9. Wabenkörper nach einem der vorhergehenden Ansprüche, umhüllt von einem Mantelrohr (11), dadurch gekennzeichnet, daß der Verbindungssteg (83) in einem Kragen (81) befestigt ist, der seinerseits auf dem Mantelrohr (11) steckt.

10. Wabenkörper nach einem der vorhergehenden Ansprüche, umhüllt von einem Mantelrohr (11), dadurch gekennzeichnet, daß der Verbindungssteg (83) in einem Rahmen befestigt ist, der seinerseits im Mantelrohr (11) steckt.

11. Wabenkörper nach einem der vorhergehenden Ansprüche, dadurch gekennzeichnet, daß das in einen Kanal (24) hineinreichende Ende des Verbindungsstegs (13; 33; 63; 83) an die Querschnittsform und die Querschnittsmaße des Kanals (24) angepaßt ist.

## Claims

1. A honeycomb body (12) comprising passages (24) which extend approximately parallel and through which fluid can flow, and electrically heatable portions (22a-d) which are partially electrically insulated from each other by at least one gap (23) so that there is a tortuous and preferably approximately meander-like current path (25) through the honeycomb body (12), characterised in that the gap (23) between the portions (22a-d) is stabilised by at least one electrically insulating connecting limb (13; 33; 63; 83a-c; 93) which has at least one fixing point (14; 34; 64; 84; 94) within a portion (22a-d; 52), whereby at least one end of a connecting limb (13; 33: 63; 83) projects into a passage (24) and is fixed there.

2. A honeycomb body according to claim 1 enclosed by a tubular casing (11) characterised in that the connecting limb (13; 33; 83a-c; 93) connects the tubular casing (11) to at least one portion (22a-d; 82) of the honeycomb body (12).

3. A honeycomb body according to claim 1 or claim 2 characterised in that the connecting limb (13; 33; 63; 83a-c; 93) makes at least one connection (34; 64; 84; 94) between different portions (22a-d; 82) of the honeycomb body (12).

4. A honeycomb body according to claim 1, claim 2 or claim 3 enclosed by a tubular casing (11) characterised in that the connecting limb (63; 93) provides a connection (64; 94) between diametrally oppositely disposed portions of the tubular casing (11) and at least one honeycomb body portion (22a-d).

5. A honeycomb body according to claim 1, claim 2, claim 3 or claim 4 characterised in that the connecting limb (13; 33) entirely or partially projects beyond at least one end of the honeycomb body (12).

6. A honeycomb body according to claim 1, claim 2, claim 3 or claim 4 characterised in that the connecting limb (63; 93) extends in a plane at the ends of the honeycomb body (12) between the ends.

7. A honeycomb body according to one of the preceding claims characterised in that the connecting limb is in the form of a multilayer encased pin (63) whose inner layer (93a) and outer layer (93c) each comprise a metallic material while the interposed layer (93b) is electrically insulating.

8. A honeycomb body according to one of the preceding claims characterised in that the connecting limb (13; 33; 63) is in the form of a bridge with at least two support pillars which are each electrically insulated from each other.

9. A honeycomb body according to one of the preceding claims enclosed by a tubular casing (11) characterised in that the connecting limb (83) is fixed in a collar (81) which in turn fits on the tubular casing (11).

10. A honeycomb body according to one of the preceding claims enclosed by a tubular casing (11) characterised in that the connecting limb (83) is fixed in a frame which in turn fits in the tubular casing (11).

11. A honeycomb body according to one of the preceding claims characterised in that the end of the connecting limb (13; 33; 63; 83), which extends into a passage (24), is adapted to the cross-sectional shape and the cross-sectional dimensions of the passage (24).

## Revendications

1. Corps alvéolaire (12) comportant des canaux (24) pouvant être traversés par un fluide, qui s'étendent globalement parallèlement, et des zones partielles (22 a à d) pouvant être chauffées électriquement, qui sont partiellement isolées électriquement les unes par rapport aux autres par au moins une fente (23), de façon à obtenir à travers le corps alvéolaire (12) une voie de courant (25) sinueuse, de préférence sensiblement en forme de méandres, caractérisé en ce que la fente (23) entre les zones partielles (22 a à d) est stabilisée par au moins une entretoise de liaison électriquement isolante (13 ; 33 ; 63 ; 83 a à c ; 93), laquelle comporte au moins un point de fixation (14 ; 34 ; 64 ; 84 ; 94) à l'intérieur d'une zone partielle (22 a à d ; 52), une extrémité au moins de l'entretoise de liaison (13 ; 33 ; 63 ; 83) pénétrant dans un canal (24) et étant fixée dans ce dernier.

2. Corps alvéolaire selon la revendication 1, entouré d'un tube d'enveloppe (11), caractérisé en ce que l'entretoise de liaison (13 ; 33 ; 83 a à c ; 93) relie le tube d'enveloppe (11) à au moins une zone partielle (22 a à d ; 82) du corps alvéolaire (12).

3. Corps alvéolaire selon la revendication 1 ou 2, caractérisé en ce que l'entretoise de liaison (13 ; 33 ; 63 ; 83 a à c ; 93) établit au moins une liaison (34 ; 64 ; 84 ; 94) entre différentes zones partielles (22 a à d ; 82) du corps alvéolaire (12).

4. Corps alvéolaire selon la revendication 1, 2 ou 3, entouré d'un tube d'enveloppe (11), caractérisé en ce que l'entretoise de liaison (63 ; 93) établit une liaison (64 ; 94) entre des sections diamétralement opposées du tube d'enveloppe (11) et au moins une zone partielle (22 a à d) du corps alvéolaire.

5. Corps alvéolaire selon la revendication 1, 2, 3 ou 4, caractérisé en ce que l'entretoise de liaison (13 ; 33) dépasse entièrement ou partiellement de l'une au moins des faces frontales du corps alvéolaire (12).

6. Corps alvéolaire selon la revendication 1, 2, 3 ou 4, caractérisé en ce que l'entretoise de liaison (63 ; 93) s'étend dans un plan des faces frontales du corps alvéolaire (12), entre les faces frontales.

7. Corps alvéolaire selon l'une quelconque des revendications précédentes, caractérisé en ce que l'entretoise de liaison a la forme d'une broche multicouche enrobée (93), dont les couches intérieure (93a) et extérieure (93c) sont constituées d'un matériau métallique, alors que la couche intermédiaire (93b) est électriquement isolante.

8. Corps alvéolaire selon l'une quelconque des revendications précédentes, caractérisé en ce que l'entretoise de liaison (13 ; 33 ; 63) a la forme d'un pont comportant au moins deux jambes de soutien, qui sont respectivement isolées électriquement l'une par rapport à l'autre.

9. Corps alvéolaire selon l'une quelconque des revendications précédentes, entouré d'un tube d'enveloppe (11), caractérisé en ce que l'entretoise de liaison (83) est fixée dans une collerette (81) qui est de son côté emboîtée sur le tube d'enveloppe (11).

10. Corps alvéolaire selon l'une quelconque des revendications précédentes, entouré d'un tube d'enveloppe (11), caractérisé en ce que l'entretoise de liaison (83) est fixée dans un cadre qui est de son côté inséré dans le tube d'enveloppe (11).

11. Corps alvéolaire selon l'une quelconque des revendications précédentes, caractérisé en ce que l'extrémité de l'entretoise de liaison (13 ; 33 ; 63 ; 83), qui pénètre dans un canal (24), est adaptée à la forme en section transversale et aux cotes en section transversale du canal (24).
